# EUROPEAN PATENT APPLICATION

(11) **EP 3 306 541 A1**
(43) Date of publication of application: **11.04.2018**
(21) Application number: 16802724.1
(22) Date of filing: 25.03.2016
(51) Int. Cl.: G06Q 10/08, B65G 1/137, G01G 19/42

(54) **OUT-OF-STOCK COMMODITY MANAGEMENT DEVICE AND OUT-OF-STOCK COMMODITY MANAGEMENT METHOD**

(30) Priority: 03.06.2015 JP 2015113059
(71) Applicant: Panasonic Intellectual Property Management Co., Ltd., Osaka-shi, Osaka 540-6207 (JP)
(72) Inventor: AKAMATSU, Hironori, Osaka 540-6207 (JP); SUGIURA, Masataka, Osaka 540-6207 (JP)
(74) Representative: Eisenführ Speiser
(86) International application number: PCT/JP2016/001736
(87) International publication number: WO 2016/194276

(57) **Abstract**

Out-of-stock commodity is flexibly managed according to a change in shelf assignment. Each of sensor units (101-1 to 101-N) is configured by at least one pressure sensor and outputs an analog signal corresponding to a weight of a commodity detected by at least one pressure sensor. Sensor output unit (103) converts an analog signal output from each of a plurality of sensor units into a digital signal indicating whether or not the number of commodities in regions where respective sensor units are installed is equal to or less than a predetermined number. Combination setter (104) sets one or more groups obtained by grouping a plurality of sensor units. Output integrator (105) integrates a digital signal for each group. Out-of-stock commodity manager (106) manages an out-of-stock commodity state of commodities in each group, based on an integrated digital signal.

## Description

### TECHNICAL FIELD

The present disclosure relates to an out-of-stock commodity management device and an out-of-stock commodity management method that manage out-of-stock commodity of commodities placed on a shelf of a store, a warehouse or the like.

### BACKGROUND ART

A sensor measuring a weight of a commodity placed on a shelf of a store, a warehouse or the like is installed, and a method of detecting an out-of-stock commodity, based on the measurement result of the sensor is proposed. Patent Document 1 discloses a method of detecting presence or absence of a commodity based on On/Off of individual sensors installed on a shelf. In addition, Patent Document 2 proposes a method of sequentially switching a plurality of sensors installed on a shelf to calculate the number of commodities from detection results of each sensor.

### Citation List

### Patent Literature

PTL 1: Japanese Patent Unexamined Publication No. 1-271308
PTL 2: Japanese Patent Unexamined Publication No. 4-238597

### SUMMARY OF THE INVENTION

However, in Patent Document 1 and Patent Document 2, since an out-of-stock commodity is detected based on detection results in an individual sensor unit there is a problem that an out-of-stock commodity cannot be flexibly managed according to a change in layout (shelf assignment) of a shelf, such as a case where products to be displayed and stored on shelves are replaced.

An object of one aspect of the present disclosure is to provide an out-of-stock commodity management device and an out-of-stock commodity management method that can flexibly manage out-of-stock commodities according to a change in shelf assignment.

An out-of-stock commodity management device according to one aspect of the present disclosure adopts a configuration including a plurality of sensor units, each including at least one pressure sensor and outputting an analog signal corresponding to a weight of a commodity that is measured by the at least one pressure sensor; a sensor output unit that converts an analog signal which is output from each of the plurality of sensor units into a digital signal indicating whether or not the number of commodities in regions where respective sensor units are installed is equal to or less than a predetermined number; a combination setter that sets one or more groups obtained by grouping the plurality of sensor units; an output integrator that integrates the digital signal for each group; and a manager that manages an out-of-stock commodity state of commodities in each group, based on the integrated digital signal.

An out-of-stock commodity management method according to one aspect of the present disclosure outputs an analog signal from each of a plurality of sensor units, each of which is configured by at least one pressure sensor, converts the analog signal corresponding to a weight of a commodity that is detected by the at least one pressure sensor into a digital signal indicating whether or not the number of commodities in regions where the respective sensor units are installed is equal to or less than a predetermined number, sets one or more groups obtained by grouping the plurality of sensor units, integrates the digital signal for each group, and manages an out-of-stock commodity state of commodities in each group, based on the integrated digital signal.

According to one aspect of the present disclosure, it is possible to flexibly manage out-of-stock commodities according to a change in shelf assignment.

### BRIEF DESCRIPTION OF DRAWINGS

FIG. 1 is a block diagram illustrating a configuration of an out-of-stock commodity management device according to one exemplary embodiment;
FIG. 2A is a diagram illustrating an example of an out-of-stock commodity management table according to the exemplary embodiment;
FIG. 2B is a diagram illustrating an example of an out-of-stock commodity management table according to the exemplary embodiment;
FIG. 3 is a block diagram illustrating a configuration example 1 of the out-of-stock commodity management device according to the exemplary embodiment;
FIG. 4 is a block diagram illustrating a configuration example 2 of the out-of-stock commodity management device according to the exemplary embodiment;
FIG. 5 is a block diagram illustrating a configuration example 3 of the out-of-stock commodity management device according to the exemplary embodiment;
FIG. 6 is an operation flowchart illustrating out-of-stock commodity management processing of the out-of-stock commodity management device according to the exemplary embodiment;
FIG. 7 is a view illustrating a combination example of sensor units according to the exemplary embodiment;
FIG. 8 is a view illustrating another combination example of the sensor units according to the exemplary embodiment;
FIG. 9 is a view illustrating an example of a hardware configuration relating to an output integrator according to the exemplary embodiment;
FIG. 10A is a diagram illustrating an example of an output of an AD converter according to the exemplary embodiment;
FIG. 10B is a diagram illustrating an example of an output of the output integrator according to the exemplary embodiment;
FIG. 10C is a diagram illustrating another example of the output of the output integrator according to the exemplary embodiment;
FIG. 11 is a view illustrating an installation example of sensor units according to variation 1;
FIG. 12 is a view illustrating an installation example of sensor units according to variation 2;
FIG. 13A is a diagram illustrating an example of a user interface (GUI) illustrating an arrangement diagram of sensor units according to variation 3;
FIG. 13B is a diagram illustrating a state of shelf assignment setting in the arrangement diagram of the sensor units according to variation 3;
FIG. 13C is a diagram illustrating an example of a GUI at the time of completion of the shelf assignment setting in the arrangement diagram of the sensor units according to variation 3, and an out-of-stock commodity management table corresponding to the shelf assignment setting;
FIG. 14 is a block diagram illustrating a configuration of an out-of-stock commodity management device according to variation 4;
FIG. 15A is a diagram illustrating an example of a shelf label management table according to variation 4;
FIG. 15B is a diagram illustrating an example of an out-of-stock commodity management table according to variation 4;
FIG. 16 is an operation flowchart illustrating out-of-stock commodity management processing of an out-of-stock commodity management device according to variation 4;
FIG. 17A is a diagram illustrating another example of the shelf label management table according to variation 4;
FIG. 17B is a diagram illustrating an example of a table in which the out-of-stock commodity management table and the shelf label management table according to variation 4 are integrated;
FIG. 18 is a view illustrating a sequence of associating a shelf label ID, a product ID or a sensor unit ID according to variation 4;
FIG. 19 is a block diagram illustrating a configuration of an out-of-stock commodity management device according to variation 5;
FIG. 20 is a view illustrating an example of a hardware configuration relating to the output integrator according to variation 6;
FIG. 21A is a diagram illustrating an example of an out-of-stock commodity management table according to variation 6;
FIG. 21B is a diagram illustrating an example of an out-of-stock commodity management table according to variation 6;
FIG. 22 is a diagram illustrating an example of out-of-stock commodity determination processing of an out-of-stock commodity manager according to variation 6;
FIG. 23A is a diagram illustrating an example of the out-of-stock commodity management table according to variation 7; and
FIG. 23B is a diagram illustrating an example of the out-of-stock commodity management table according to variation 7.

### DESCRIPTION OF EMBODIMENTS

Hereinafter, an exemplary embodiment according to an aspect of the present disclosure will be described in detail with reference to the drawings.

### [Configuration of Out-of-Stock Commodity Management Device]

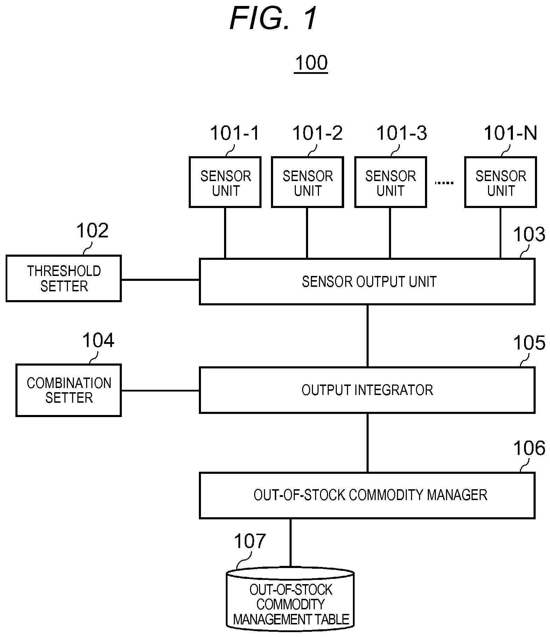

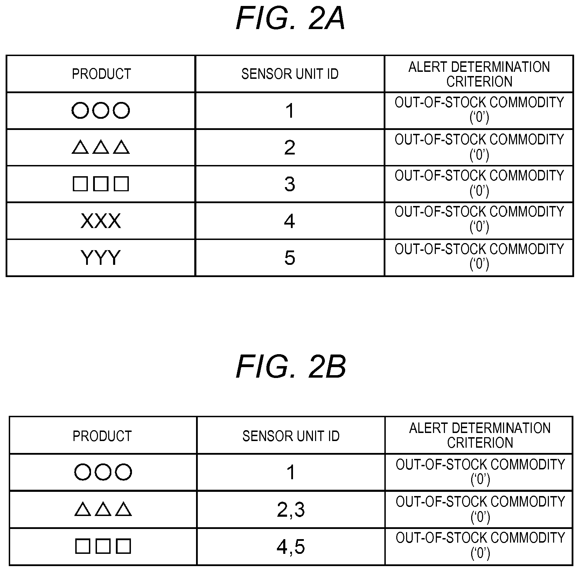

FIG. 1 is a block diagram illustrating a configuration of out-of-stock commodity management device 100 according to the present exemplary embodiment. In addition, FIGS. 2A and 2B are diagrams illustrating examples of information stored in out-of-stock commodity management table 107 which will be described below.

Out-of-stock commodity management device 100 illustrated in FIG. 1 adopts a configuration including N (N is an arbitrary integer) sensor units 101, threshold setter 102, sensor output unit 103, combination setter 104, output integrator 105, out-of-stock commodity manager 106, and out-of-stock commodity management table 107.

Each of N sensor units 101 is configured by at least one commodity detection sensor, and is installed at a place where commodities in a shelf are placed. As the commodity detection sensor, for example, a pressure sensor (for example, a diaphragm gauge, a capacitive sensor, or a strain sensor) whose current, voltage or resistance changes depending on pressure may be used. Each of sensor units 101 outputs an analog signal (added value of an output value (current value, voltage value, resistance value or the like) of a commodity detection sensor, and the like) corresponding to a weight of a commodity detected by the commodity detection sensor configuring sensor unit 101 to sensor output unit 103.

Threshold setter 102 sets a threshold used for A/D conversion processing of sensor output unit 103. The threshold is a reference value for generating a digital signal from a current value, a voltage value, a resistance value or the like output as an analog signal. For example, in a case where the analog signal is represented by a current value, and when the number of commodities reaches zero, 0 [A] is output as the current value, and when the number of commodities is 1, Y [A] is output, and when the number of commodities is 2, 2Y [A] is output. At this time, if the threshold is set to 0 [A], Y [A], and 2Y [A], when remaining numbers are in a state of zero, one, and two, threshold setter 102 performs sensing.

Threshold setter 102 may set a threshold for each sensor unit 101 or may commonly set the threshold by using sensor unit 101. In addition, setting of threshold setter 102 may be a hardware switch or may be controlled by a software program by an external computer or the like.

Sensor output unit 103 performs A/D conversion of analog signals respectively input from respective sensor units 101, based on a threshold set by threshold setter 102. That is, sensor output unit 103 arbitrarily defines the number of commodities (thresholds) to be sensed on respective sensor units 101, and outputs a digital signal (for example, an out-of-stock commodity state is 0, and an in-stock commodity state is 1) indicating an out-of-stock commodity state. That is, sensor output unit 103 converts the analog signals output from respective sensor units 101 into digital signals indicating whether or not the number of commodities in regions where respective sensor units 101 are installed is equal to or less than a predetermined number (threshold) by A/D conversion. Sensor output unit 103 outputs the digital signal corresponding to each sensor unit 101 to output integrator 105.

Combination setter 104 sets a combination (group) of N sensor units 101. That is, combination setter 104 groups N sensor units 101 into one or a plurality of groups, and sets one or more groups. For example, combination setter 104 sets sensor units 101 installed in a region of a shelf on which commodities of the same item are placed as one group among the plurality of sensor units 101 in the shelf assignment. Combination setter 104 outputs setting information indicating the combination of sensor units 101 to the output integrator 105.

For example, in the example illustrated in FIG. 2A, combination setter 104 sets sensor unit 101 (sensor unit ID = 1) installed in a region where a product "OOO" is placed to one group, sets sensor unit 101 (sensor unit ID = 2) installed in a region where a product "ΔΔΔ" is placed to one group, sets sensor unit 101 (sensor unit ID = 3) installed in a region where a product "□□□" is placed to one group, sets sensor unit 101 (sensor unit ID = 4) installed in a region where a product "XXX" is placed to one group, and sets sensor unit 101 (sensor unit ID = 5) installed in a region where a product "YYY" is placed to one group. That is, in FIG. 2A, combination setter 104 sets one group for each sensor unit 101.

In addition, in another example illustrated in FIG. 2B, combination setter 104 sets sensor unit 101 (sensor unit ID = 1) installed in the region where the product "OOO" is placed to one group, sets sensor unit 101 (sensor unit ID = 2 and 3) installed in the region where "ΔΔΔ" is placed to one group, and sets sensor unit 101 (Sensor unit ID = 4 and 5) installed in the region where the product "□□□" is placed to one group. That is, in FIG. 2A, combination setter 104 sets a plurality of sensor units 101 as one group for each one or two.

Output integrator 105 integrates an output signal (digital signal) of each sensor unit 101 input from sensor output unit 103, for each combination (group) of sensor units 101 indicated by the setting information input from combination setter 104, and outputs an output signal for each combination (group) to out-of-stock commodity manager 106. For example, the output signal (integrated digital signal) of output integrator 105 is an one-bit signal representing an out-of-stock commodity state (out-of-stock commodity state or in-stock commodity state) of the commodities for each group.

Output integrator 105 may output a bit string of one set (a series of signal groups) configured by digital signals corresponding to each group to out-of-stock commodity manager 106, and may individually output the digital signals corresponding to each group to out-of-stock commodity manager 106. That is, the output of output integrator 105 may have any configuration as long as out-of-stock commodity manager 106 can perform out-of-stock commodity determination (out-of-stock commodity management) for each combination (group) of sensor units 101.

Out-of-stock commodity manager 106 manages out-of-stock commodity state of commodities in each group by referring to out-of-stock commodity management table 107, based on the digital signals of each group output from output integrator 105.

In a case where outputs of the digital signals (integrated digital signals) corresponding to sensor units 101 included in each group satisfy an alert determination criterion that is a predetermined condition, out-of-stock commodity manager 106 determines that the commodity in the region corresponding to sensor unit 101 included in the group is out of stock.

The alert determination criterion is set by out-of-stock commodity management table 107 managed by out-of-stock commodity manager 106. For example, as illustrated in FIGS. 2A and 2B, out-of-stock commodity management table 107 stores commodities (product name, product identifier or the like) to be stored on a shelf, sensor unit ID indicating sensor unit 101 installed in a region where the commodities are placed, and an alert determination criterion indicating a condition for notifying an external device of an alert signal indicating that commodities are in an out-of-stock commodity state, in association with each other.

In FIGS. 2A and 2B, in the digital signal output from output integrator 105, '0' represents an out-of-stock commodity state of commodities, and '1' represents an in-stock commodity state of the commodities.

For example, in the example illustrated in FIG. 2A, in a case where an output of sensor unit 1 set as one group corresponding to the product "OOO" indicates the out-of-stock commodity state ('0'), out-of-stock commodity manager 106 determines that the product "OOO" is out of stock. In the same manner, in FIG. 2A, in a case where an output of the sensor unit 2 set as one group corresponding to the product "ΔΔΔ" indicates the out-of-stock commodity state ('0'), out-of-stock commodity manager 106 determines that the product "ΔΔΔ" is out of stock. The same applies to the other sensor units 101-3 to 101-5.

In addition, in the example illustrated in FIG. 2B, in a case where the output of sensor unit 1 set as one group corresponding to the product "OOO" indicates the out-of-stock commodity state ('0"), out-of-stock commodity manager 106 determines that the product "OOO" is out of stock. In the same manner, in FIG. 2B, in a case where outputs of sensor units 2 and 3 set as one group corresponding to the product "ΔΔΔ" indicate the out-of-stock commodity state ('0'), out-of-stock commodity manager 106 determines that the product "ΔΔΔ" is out of stock.

In addition, in FIG. 2, in a case where outputs of sensor units 4 and 5 set as one group corresponding to the product "□□□" indicate the out-of-stock commodity state ('0'), out-of-stock commodity manager 106 determines that the product "□□□" is out of stock.

Here, a center device controlling the entire system including out-of-stock commodity management device 100, a terminal device of an inventory management system or an ordering system, a mobile terminal carried by an employee of a store, a warehouse or the like where a shelf is installed, or the like can be used as an external device to which the alert signal is notified.

In a case where the out-of-stock commodity determination result (information indicating an out-of-stock commodity state, an out-of-stock commodity or an in-stock commodity) in each group satisfies the alert determination criterion, out-of-stock commodity manager 106 transmits an alert signal relating to the out-of-stock commodity of the commodity corresponding to the group to the external device.

As such, the configuration of out-of-stock commodity management device 100 is described above.

### [Configuration Example of Out-of-stock Commodity Management Device 100]

Each configuration unit of out-of-stock commodity management device 100 may be configured by hardware or may be configured by software operating in a processor. Hereinafter, configuration examples 1 to 3 of out-of-stock commodity management device 100 will be described, as an example.

### (Configuration Example 1)

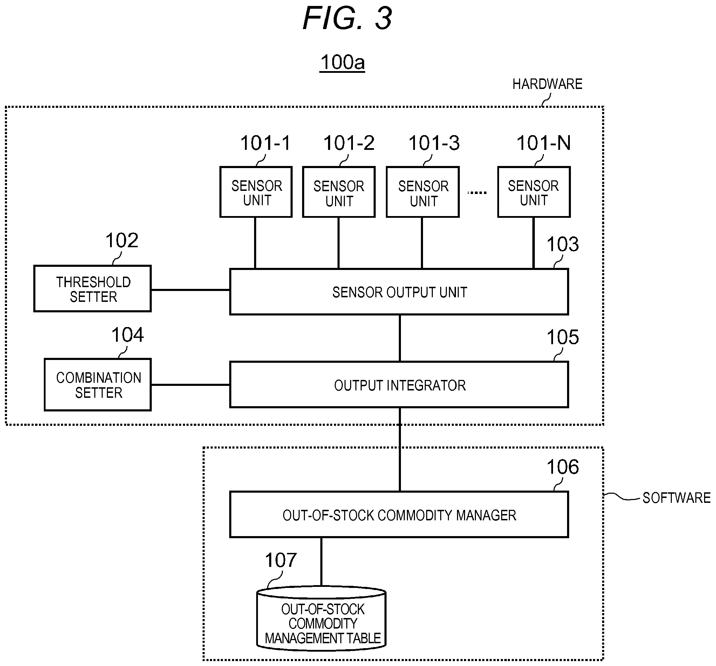

FIG. 3 is a block diagram illustrating configuration example 1 of the out-of-stock commodity management device. In out-of-stock commodity management device 100a illustrated in FIG. 3, sensor unit 101 (for example, pressure sensor), threshold setter 102, sensor output unit 103 (for example, A/D converter), combination setter 104, and output integrator 105 (hard switch) are configured by hardware, and out-of-stock commodity manager 106 and out-of-stock commodity management table 107 are configured by software (programs) operating in a processor such as a personal computer (PC) or the like. In this case, output integrator 105 switches a combination of sensor units 101 by switching connections of the output signals of sensor units 101 using hard switches.

### (Configuration Example 2)

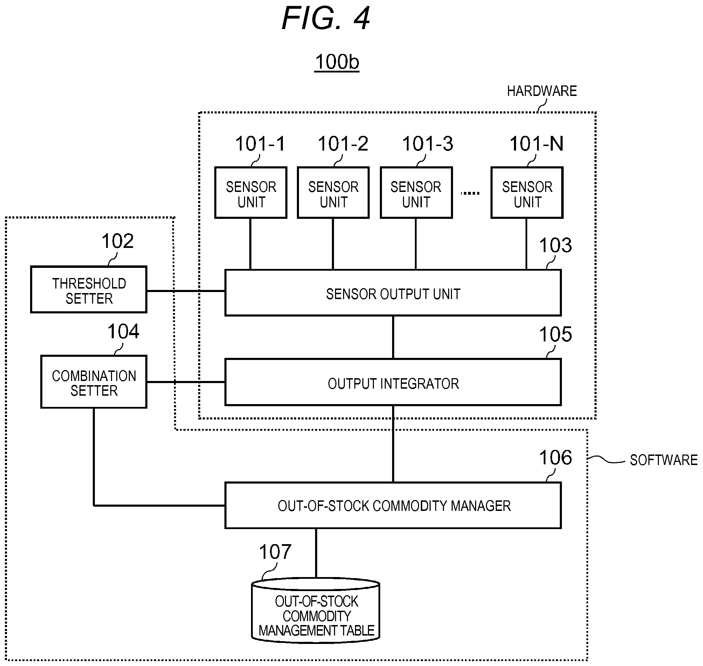

FIG. 4 is a block diagram illustrating configuration example 2 of the out-of-stock commodity management device. In out-of-stock commodity management device 100b illustrated in FIG. 4, sensor unit 101 (for example, a pressure sensor), sensor output unit 103 (for example, an A/D converter), and output integrator 105 (a hard switch) are configured by hardware, and threshold setter 102, combination setter 104, out-of-stock commodity manager 106, and out-of-stock commodity management table 107 are configured by software (programs) operating in a processor in for example, a PC or the like.

### (Configuration Example 3)

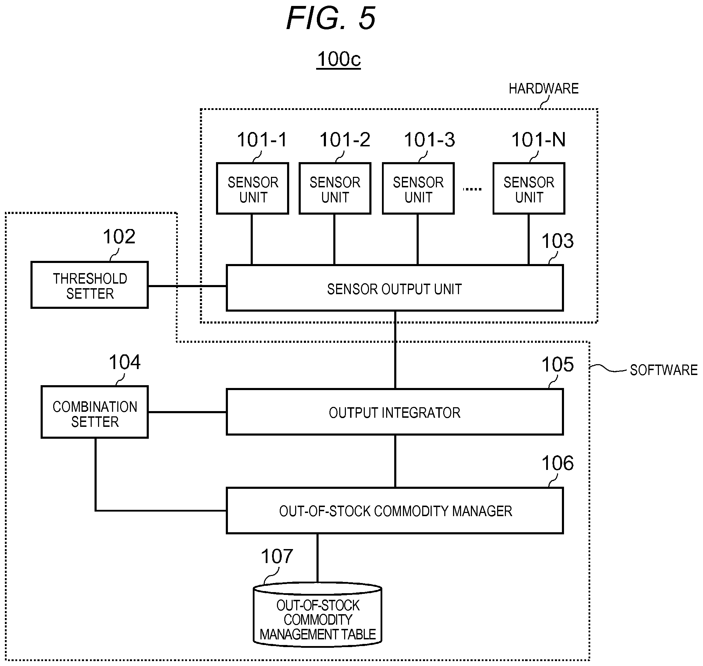

FIG. 5 is a block diagram illustrating configuration example 3 of the out-of-stock commodity management device. In out-of-stock commodity management device 100c illustrated in FIG. 5, sensor unit 101 (for example, a pressure sensor) and sensor output unit 103 (for example, an A/D converter) are configured by hardware, and threshold setter 102, combination setter 104, output integrator 105, out-of-stock commodity manager 106, and out-of-stock commodity management table 107 are configured by software (program) operating in a processor such as a PC or the like. In this case, output integrator 105 calculates a logical sum of the output signals (digital signals) of each sensor unit 101 for each group, thereby, realizing grouping of sensor units 101.

### [Operation of Out-of-stock Commodity Management Device 100]

Next, an operation of above-described out-of-stock commodity management device 100 will be described in detail.

### (Out-of-stock Commodity Management Processing)

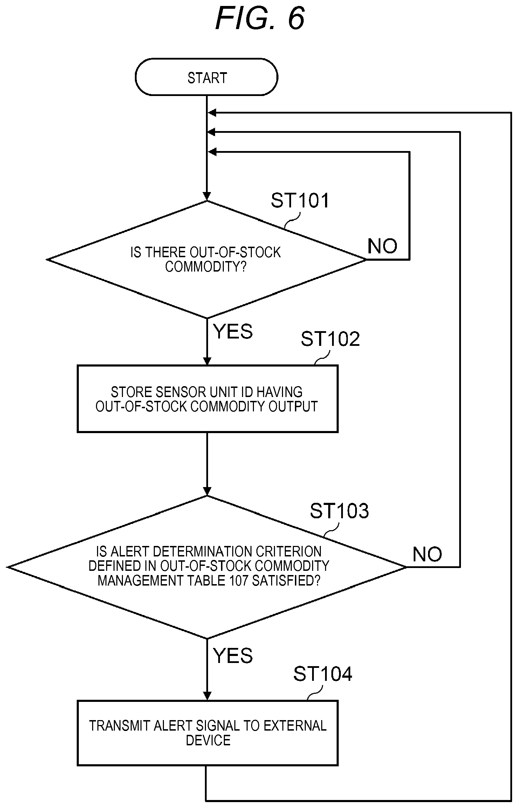

FIG. 6 is an operation flowchart illustrating an example of out-of-stock commodity management processing of out-of-stock commodity management device 100 according to the present exemplary embodiment.

In FIG. 6, it is assumed that output integrator 105 frequently outputs a signal obtained by integrating output signals (digital signals) of each sensor units 101 for each group to out-of-stock commodity manager 106.

In addition, in FIG. 6, it is assumed that an output of output integrator 105 is a digital signal indicating whether or not the number of commodities in a region where sensor unit 101 in a group is installed is equal to or less than a predetermined number.

In FIG. 6, in step (hereinafter referred to as "ST") 101, out-of-stock commodity manager 106 determines whether or not there is an out-of-stock commodity of commodities for each group, based on the output signal from output integrator 105. In a case where there is no out-of-stock commodity (ST101: NO), out-of-stock commodity manager 106 repeats processing of ST101.

In a case where there is an out-of-stock commodity (ST101: YES), out-of-stock commodity manager 106 records sensor unit ID of sensor unit 101 configuring a group corresponding to the out-of-stock commodity, in ST 102.

In ST103, out-of-stock commodity manager 106 determines whether or not an out-of-stock commodity state of the group corresponding to the out-of-stock commodity recorded in ST102 satisfies an alert determination criterion.

For example, in out-of-stock commodity management table 107 illustrated in FIG. 2, a state in which an out-of-stock commodity is detected for each product is defined as an alert determination criterion.

Thus, out-of-stock commodity manager 106 determines that the out-of-stock commodity state of the group corresponding to sensor unit 101 recorded in ST102 satisfies the alert determination criterion in ST103 for each product.

In a case where the alert determination criterion is not satisfied (ST103: NO), out-of-stock commodity manager 106 returns to the processing of ST101 and performs out-of-stock commodity detection processing. Meanwhile, in a case where the alert determination criterion is satisfied (ST103: YES), out-of-stock commodity manager 106 transmits an alert signal relating to the out-of-stock commodity of the commodity (product) corresponding to a group that satisfies the alert determination criterion in ST103 to the external device, in ST104. Then, out-of-stock commodity management device 100 returns to the processing of ST101.

### (Combination setting processing)

Next, combination (group) setting processing of sensor unit 101 in out-of-stock commodity management device 100 will be described in detail.

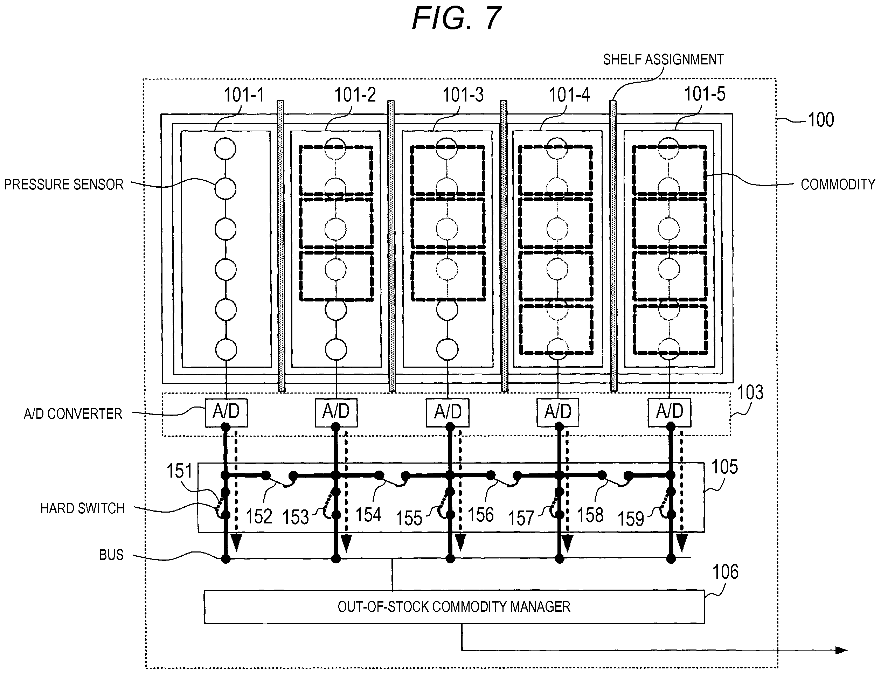

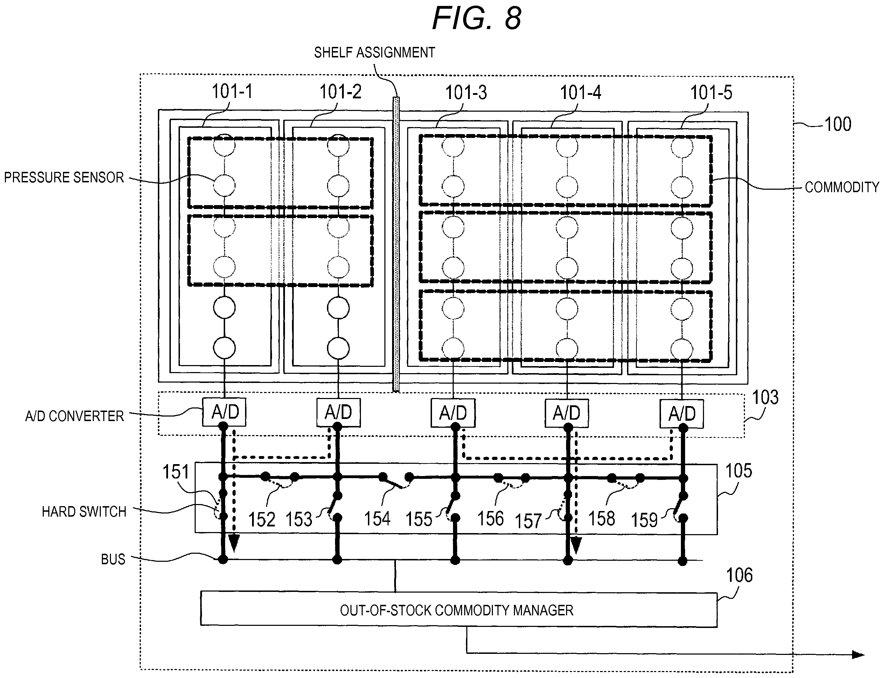

FIGS. 7 and 8 are views illustrating combination examples of the sensor units. Processing examples of out-of-stock commodity management device 100 in a case where different shelf assignments are set are respectively illustrated.

In FIGS. 7 and 8, in the same manner as in configuration example 1 described above (see FIG. 3), an image of a logical configuration of a case where sensor unit 101 (pressure sensor), sensor output unit 103 (A/D converter), and output integrator 105 (hard switch) are configured by hardware will be described as an example.

That is, as illustrated in FIG. 7 and FIG. 8, in output integrator 105, a combination of outputs of respective sensor units 101 are switched by On/Off of hard switches 151 to 159. Switching of hard switches 151 to 159 is performed based on setting information output from combination setter 104 (not illustrated). However, the same operation as an operation which will be described below may be performed in out-of-stock commodity management device 100 according to the other configuration examples 2 to 3.

FIG. 7 illustrates shelf assignment in a case where sensor units 101 and commodities (products of) correspond one to one. In the shelf assignment illustrated in FIG. 7, shelves are partitioned for each region where respective sensor units 101-1 to 101-5 are installed. In addition, the commodities are represented by a square frame in FIG. 7.

In a case of FIG. 7, combination setter 104 sets each of sensor units 101-1 to 101-5 as one group. Thus, output integrator 105 individually outputs the outputs of respective sensor units 101 to out-of-stock commodity manager 106 without integration.

That is, as illustrated in FIG. 7, in output integrator 105, hard switches 151, 153, 155, 157, and 159 are turned on and hard switches 152, 154, 156, and 158 are turned off. Thereby, output signals (digital signals) of respective sensor units 101 are individually output to out-of-stock commodity manager 106 through output integrator 105 (dotted arrow illustrated in FIG. 7).

Out-of-stock commodity manager 106 detects an out-of-stock commodity of commodities, based on the output signals of respective sensor units 101. For example, in FIG. 7, since commodities (represented by a square frame) are not placed on the shelf corresponding to sensor unit 101-1, out-of-stock commodity manager 106 detects the out-of-stock commodity of the commodities corresponding to sensor unit 101-1, based on the output signal of sensor unit 101-1. Meanwhile, in FIG. 7, since commodities are placed on the shelf corresponding to respective sensor units 101-2 to 101-5, out-of-stock commodity manager 106 does not detect (detects an in-stock commodity state) the out-of-stock commodity of the commodities corresponding to each of respective sensor units 101-2 to 101-5, based on the output signal of each of sensor units 101 - 2 to 101 - 5.

Out-of-stock commodity manager 106 determines whether or not to satisfy the alert determination criterion (see, for example, FIG. 2A) (that is, whether or not to transmit the alert signal), based on the out-of-stock commodity detection results (that is, out-of-stock commodity state) of respective sensor units 101.

Next, FIG. 8 illustrates the shelf assignment in a case where sensor units 101 and the commodities (products) correspond N to 1. In the shelf assignment illustrated in FIG. 8, the shelves are partitioned into a region where sensor units 101-1 and 101-2 are installed and a region where sensor units 101-3 to 101-5 are installed. In the same manner as in FIG. 7, the commodities are represented by square frames.

In FIG. 8, one commodity (product) corresponds to sensor units 101-1 and 101-2, and one commodity (product) corresponds to sensor units 101-3 to 101-5. That is, in FIG. 8, commodities of one item are placed over the detection areas of sensor units 101-1 and 101-2, and commodities of another item are placed over the detection area of sensor units 101-3 to 101-5.

In a case of FIG. 8, combination setter 104 sets sensor units 101-1 and 101-2 as one group and sets sensor units 101-3 to 101-5 as another group. Thus, output integrator 105 integrates outputs of sensor units 101-1 and 101-2, integrates outputs of sensor units 101-3 to 101-5, and outputs the integrated outputs to out-of-stock commodity manager 106.

That is, as illustrated in FIG. 8, in output integrator 105, hard switches 151, 152, 156, 157, 158 are turned on and hard switches 153, 154, 155, 159 are turned off. Thereby, output signals (digital signals) of sensor units 101-1 and 101-2 are integrated, output signals (digital signals) of sensor units 101-3 to 101-5 are integrated, and the integrated outputs are output to out-of-stock commodity manager 106 through output integrator 105 (dotted line arrows illustrated in FIG. 8).

Out-of-stock commodity manager 106 detects an out-of-stock commodity of commodities, based on the output signals integrated by sensor units 101 for each group. For example, in FIG. 8, since the commodities are placed on the shelves corresponding to sensor units 101-1 and 101-2 and the shelves corresponding to sensor units 101-3 to 101-5, out-of-stock commodity manager 106 does not detect an out-of-stock commodity of the commodities corresponding to sensor units 101-1 to 101-2 and an out-of-stock commodity of commodities corresponding to sensor units 101-3 to 101-5 (detects an in-stock commodity state), based on the output signals of respective sensor units 101.

Out-of-stock commodity manager 106 determines whether or not to satisfy the alert determination criterion (that is, whether or not to transmit the alert signal), based on out-of-stock commodity detection results (out-of-stock commodity state) of respective sensor units 101. In the example of FIG. 8, since no out-of-stock commodity of the commodities is detected in any group, the alert signal is not transmitted.

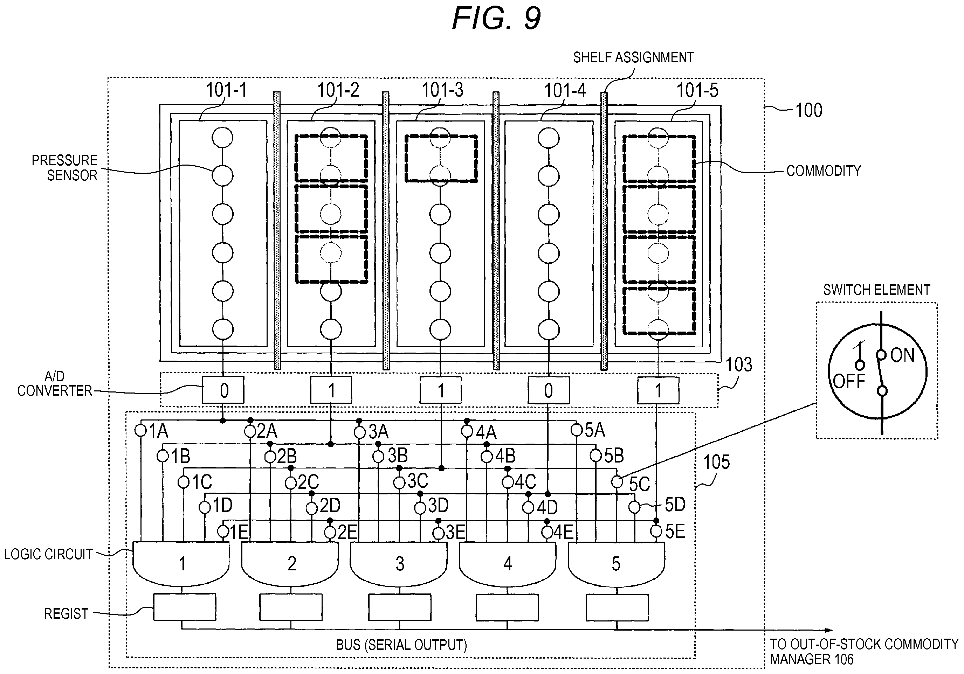

Next, a realization example of a hardware configuration relating to output integrator 105 will be described. FIG. 9 illustrates an example of the hardware configuration relating to output integrator 105 in out-of-stock commodity management device 100.

FIG. 9 illustrates an example in a case where the respective A/D converters included in sensor output unit 103 convert outputs (analog signals) from respective sensor units 101 into one-bit digital data according to a predetermined threshold criterion and output the digital data to output integrator 105.

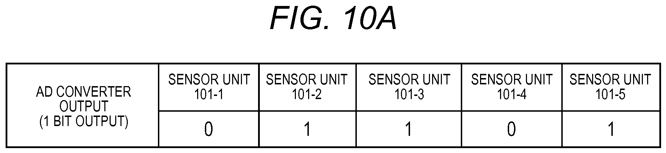

FIG. 10A illustrates an output example of sensor output unit 103 (AD converter) in out-of-stock commodity management device 100 having the hardware configuration illustrated in FIG. 9.

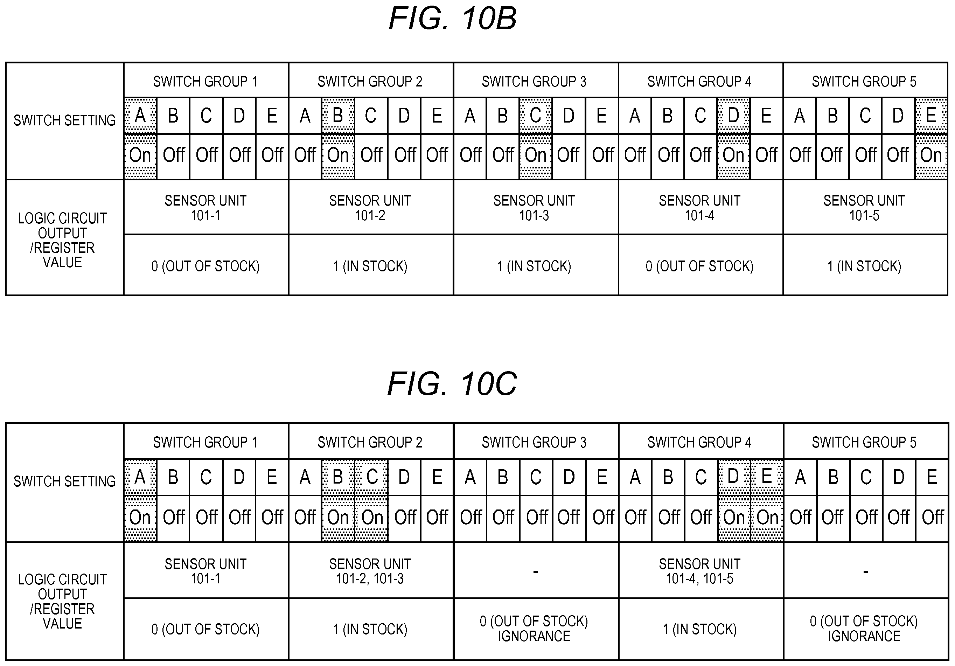

In addition, FIG. 10B illustrates an example of switch setting and logic circuit output of output integrator 105 in a case where respective sensor units 101 are set as one group. In addition, FIG. 10C illustrates an example of the switch setting and the logic circuit output of output integrator 105 in a case where sensor unit 101-1 is set as one group, sensor units 101-2 and 101-3 are set as one group, and sensor units 101-4 and 101-5 are set as one group.

In FIG. 9, a threshold used for determination of 0/1 with respect to the analog signal output from sensor unit 101 in the A/D converter is configured so as to be able to be arbitrarily set by setting from the outside (for example, threshold setter 102). Here, the threshold is set such that an output of A/D converter becomes 0, in a state where the number of commodities placed on sensor units 101 is 0.

Thus, in the state illustrated in FIG. 9, outputs of A/D converters corresponding to sensor units 101-1 to 101-5 become 0, 1, 1, 0, and 1, respectively, as illustrated in FIG. 10A.

In output integrator 105, outputs of the A/D converters are input to logic circuits through switch groups configured by switch elements provided for respective sensor units 101. Results of logical operation processing in the logic circuits are output to registers.

In the example illustrated in FIG. 9, switch elements 1A to 5A switch On/Off of the output of the A/D converter corresponding to sensor unit 101-1, switch elements 1B to 5B switch On/Off of the output of the A/D converter corresponding to sensor unit 101-2, switch elements 1C to 5C switch On/Off of the output of the A/D converter corresponding to sensor unit 101-3, switch elements 1D to 5D switch On/Off of the output of the A/D converter corresponding to sensor unit 101-4, and switch elements 1E to 5E switch On/Off of the output of the A/D converter corresponding to sensor unit 101-5.

In the example illustrated in FIG. 9, switch elements 1A to 1E configure a switch group 1 for switching an input of logic circuit 1, switch elements 2A to 2E configure a switch group 2 for switching an input of logic circuit 2, switch elements 3A to 3E configure a switch group 3 for switching an input of logic circuit 3, switch elements 4A to 4E configure a switch group 4 for switching an input of logic circuit 4, and switch elements 5A to 5E configure a switch group 5 for switching an input of logic circuit 5.

For example, in FIG. 10B illustrating a case where an out-of-stock commodity state is determined for each sensor unit 101, switch elements 1A, 2B, 3C, 4D, and 5E are turned on and the other switch elements are turned off.

That is, in FIG. 10B, On/Off of the switch elements is set such that the output of the A/D converter is output as an output of the logic circuit as it is. Thereby, the output of logic circuit 1 corresponding to sensor unit 101-1 becomes 0 (out-of-stock commodity state), the output of logic circuit 2 corresponding to sensor unit 101-2 becomes 1 (in-stock commodity state), the output of logic circuit 3 corresponding to sensor unit 101-3 becomes 1 (in-stock commodity state), the output of logic circuit 4 corresponding to sensor unit 101-4 becomes 0 (out-of-stock commodity state), and the output of logic circuit 5 corresponding to sensor unit 101-5 becomes 1 (in-stock commodity state).

The outputs of respective logic circuits are stored in registers and, for example, are serially output to out-of-stock commodity manager 106 through a bus. The outputs (data stored in the registers) of respective logic circuits are not limited to the serial outputs, and may be output in parallel.

In addition, for example, in FIG. 10C illustrating a case where the out-of-stock commodity state is determined by a combination of sensor unit 101-1, sensor units 101-2 and 101-3, sensor units 101-4 and 101-5, for example, switch elements 1A, 2B, 2C, 4D, and 4E are turned on, and the other switch elements are turned off. That is, in FIG. 10C, a logical operation is performed for the outputs of the A/D converters corresponding to sensor units 101 combined as a group, and thereby, the out-of-stock commodity state is determined.

Specifically, an output of logic circuit 1 corresponding to sensor unit 101-1 becomes 0 (out-of-stock commodity state), the output of logic circuit 2 corresponding to sensor units 101-2 and 101-3 becomes 1 (in-stock commodity state), and the output of logic circuit 4 corresponding to sensor units 101-4, 5 becomes 1 (in-stock commodity state).

Outputs of any A/D converters are also not input to logic circuits 3 and 5 which do not correspond to any group in FIG. 10C, and the outputs of logic circuits 3 and 5 become 0 (out-of-stock commodity state).

As illustrated in FIG. 10C, the outputs of logic circuits 1, 2, and 4 are stored in the registers, and serially output to out-of-stock commodity manager 106 through, for example, a bus. The outputs (data stored in the register) of respective logic circuits are not limited to the serial outputs, and may be output in parallel.

Any configuration may be used as long as a configuration is provided in which the outputs of sensor units 101 are digitally converted and integrated (for example, a logical operation) according to the set combination, and the out-of-stock commodity state is determined, without being limited to the configuration of the output, the circuit configuration, and the like illustrated in FIG. 9 and FIG. 10A to FIG. 10C.

In addition, output integrator 105 and out-of-stock commodity manager 106 may neglect the outputs of logic circuits 3 and 5 in FIG. 10C. For example, out-of-stock commodity manager 106 may previously set an association between the output from output integrator 105 and the group, according to the combination setting. For example, in the combination setting illustrated in FIG. 10C, out-of-stock commodity manager 106 may determine that the outputs of logic circuits 1, 2, and 4 correspond to respective groups and logic circuits 3 and 5 also do not correspond to any group. Alternatively, output integrator 105 may not output the outputs of logic circuits 3 and 5 to out-of-stock commodity manager 106 in FIG. 10C, and may output only the outputs of logic circuits 1, 2, and 4 to out-of-stock commodity manager 106.

As described above, out-of-stock commodity management device 100 groups sensor units 101 and sets one or more groups. For example, out-of-stock commodity management device 100 changes combinations (groups) of a plurality of sensor units 101, according to shelf assignment. Out-of-stock commodity management device 100 detects an out-of-stock commodity of the commodities, based on the integrated output signal in accordance with the shelf assignment. Thereby, even in a case where the shelf assignment is changed, out-of-stock commodity management device 100 can manage an out-of-stock commodity of the commodities in the changed shelf assignment by changing the combination of sensor units 101 according to the change in the shelf assignment.

Thus, according to the present exemplary embodiment, it is possible to flexibly manage an out-of-stock commodity, according to a change of shelf assignment.

As such, the exemplary embodiment according to one aspect the present disclosure is described above.

### (Variations of Exemplary embodiment)

### [Variation 1]

In Variation 1, a case where different sensor units 101 are installed on a back side and a front side of a shelf will be described.

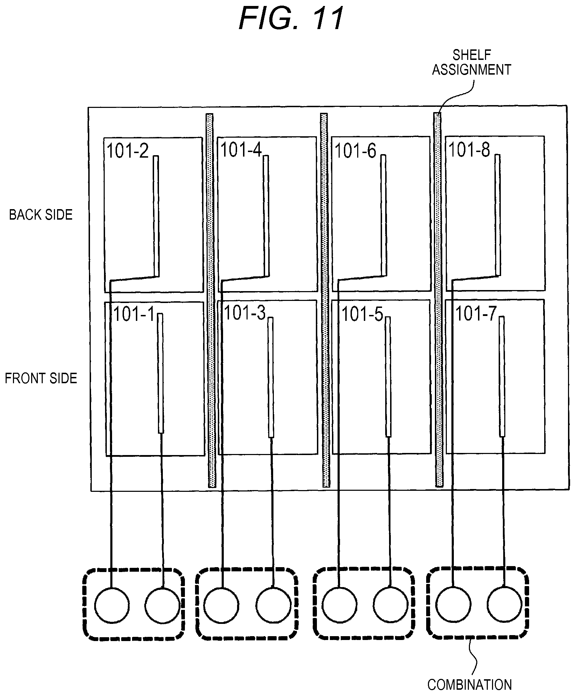

FIG. 11 is a view illustrating an installation example of sensor units according to variation 1.

In FIG. 11, shelf assignment for dividing the shelves into four is set. For example, as illustrated in FIG. 11, sensor units 101-1 and 101-2 are installed in a region where commodities of the same item are placed. At this time, sensor unit 101-1 is installed on a front side of the shelf, and sensor unit 101-2 is installed on a back side of the shelf.

Sensor units 101-3 to 101-8 are installed in other regions, in the same manner.

In this case, combination setter 104 sets sensor units 101 installed in a region on the front side and a region on the back side of the region where the commodities of the same item are placed, as a combination corresponding to the commodities. In FIG. 11, combination setter 104 sets a combination of sensor units 101-1 and 101-2, a combination of sensor units 101-3 and 101-4, a combination of sensor units 101-5 and 101-6, and a combination of sensor units 101-7 and 101-8.

That is, combination setter 104 sets sensor units 101 installed in each of the plurality of sub-regions obtained by dividing (in this case, dividing into two) the regions where the commodities of the same item are placed, among the plurality of sensor units 101, to one combination (group).

Thereby, out-of-stock commodity manager 106 can detect an out-of-stock commodity in the commodities of the same item by dividing an out-of-stock commodity state on the front side and the out-of-stock commodity state on the back side. For example, out-of-stock commodity manager 106 may define a case where the commodity on the front side (or the back side) is out of stock, as an alert determination criterion.

By doing so, out-of-stock commodity management device 100 can manage an out-of-stock commodity state of commodities more minutely.

A case where different sensor units 101 are installed on the front side and the back side of the region where the commodities of the same item are placed is described in FIG. 11. In contrast to this, output levels of the output signals of the plurality of pressure sensors configuring sensor units 101 may differ for each of the plurality of sub-regions obtained by dividing the regions where the commodities of the same item are placed. For example, as illustrated in FIG. 7, one sensor unit 101 is installed over the front side and the back side of the shelf, and output characteristics (output value (current and the like) at the time of detecting commodities) of a commodity detection sensor (pressure sensor) configuring sensor unit 101 may differ between the front side and the back side (that is, for each sub-region).

In this case, an output level of the pressure sensor installed on the back side may be larger (smaller) than an output level of the pressure sensor installed on the front side. By doing so, a decrease width of an output value of the pressure sensor in a case where the commodity is lost from a state where the commodity is placed is larger (smaller) in the pressure sensor on the back side than in the pressure sensor on the front side. Thus, out-of-stock commodity manager 106 can determine that there is an out-of-stock commodity either on the back side or on the front side of the shelf, based on a difference between the decrease widths.

### [Variation 2]

In variation 2, a case where different sensor units 101 are installed on the back side, the front side, and the center of the shelf will be described.

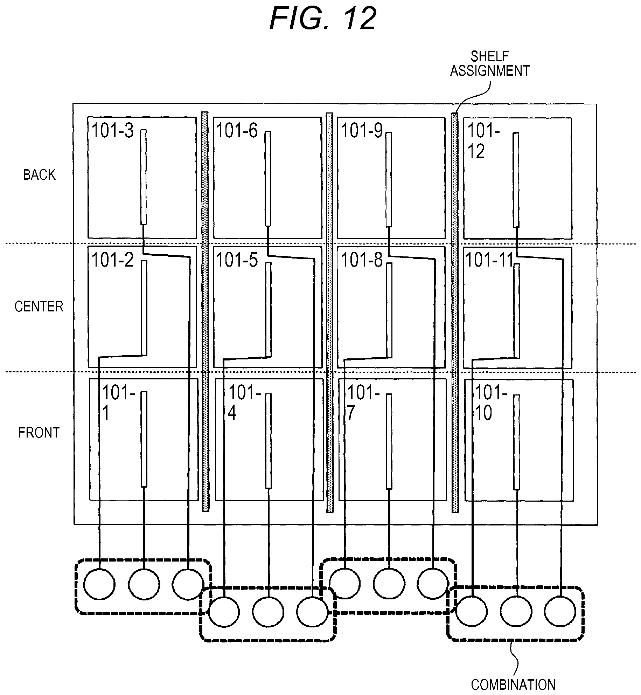

FIG. 12 is a view illustrating an installation example of the sensor units according to variation 2.

In FIG. 12, in the same manner as in FIG. 11, the shelf assignment for dividing the shelves into four is set. For example, as illustrated in FIG. 12, sensor units 101-1 to 3 are installed in a region where commodities of the same item are placed. At this time, in a depth direction of the shelf, sensor unit 101-1 is installed on the front side of the shelf, sensor unit 101-2 is installed in the center of the shelf, and sensor unit 101-3 is installed on the back side of the shelf. In the same manner, sensor units 101-4 to 101-12 are also installed in the other regions.

In this case, combination setter 104 sets sensor units 101 respectively installed in the region on the front side, the region in the center, and the region on the back side of the regions where commodities of the same item are placed, as a combination of sensor units 101 corresponding to the commodities. In FIG. 12, combination setter 104 sets a combination of sensor units 101-1 to 101-3, a combination of sensor units 101-4 to 101-6, a combination of sensor units 101-7 to 101-9, and a combination of sensor units 101-10 to 101-12.

That is, combination setter 104 sets sensor units 101 installed in each of the plurality of regions obtained by dividing (in this case, dividing into three) the regions where commodities of the same item are placed among the plurality of sensor units 101, to one combination (group).

Thereby, out-of-stock commodity manager 106 can separately detect the out-of-stock commodity state on the front side, the out-of-stock commodity state in the center, and the out-of-stock commodity state on the back side, for the commodities of the same item. For example, out-of-stock commodity manager 106 may differently set an alert determination criterion for transmitting an alert signal in a case where the commodity on the back side is out of stock, an alert determination criterion for transmitting an alert signal in a case where the commodity in the center is out of stock, and an alert determination criterion for transmitting an alert signal in a case where the commodity on the front side is out of stock.

By doing so, out-of-stock commodity management device 100 can manage the out-of-stock commodity state of commodities more minutely.

In FIG. 12, a case where different sensor units 101 are installed on the front side, the center side, and the back side of the shelf is described. In contrast to this, the output levels of the output signals of the plurality of pressure sensors configuring sensor units 101 may differ for each of the plurality of sub-regions obtained by dividing the regions where the commodities of the same item are placed. For example, as illustrated in FIG. 7, one sensor unit 101 is installed over the front side of the shelf to the back side of the shelf, and the output characteristic (output value (current and the like) at the time of detecting commodities) of the commodity detection sensor (pressure sensor) configuring sensor unit 101 may differ between the front side, the center side, and the back side (that is, for each sub-region).

For example, the output level of the pressure sensor on the back side may be set to the highest level, the output level of the pressure sensor on the front side may be set to the lowest level, and the output level of the central pressure sensor may be set to an intermediate level. In this case, a decreases width of the output value of the pressure sensor in a case where the commodity is lost from a state where the commodities are placed differs from the pressure sensors on the front side, the center side, and the back side. Thus, out-of-stock commodity manager 106 can determine that the commodity is out of stock on the front side, the center side, or the back side of the shelf, in the same manner as in variation 2, based on a difference between the decrease widths.

In addition, in variation 1 and 2, a case where the regions in which commodities of the same item are placed are divided into two or three, but the present disclosure is not limited to this, and one aspect of the present disclosure can be implemented even in a case of four or more divisions.

### [Variation 3]

In variation 3, an example of a user interface (GUI) at the time of setting a combination of sensor units 101 in combination setter 104 will be described.

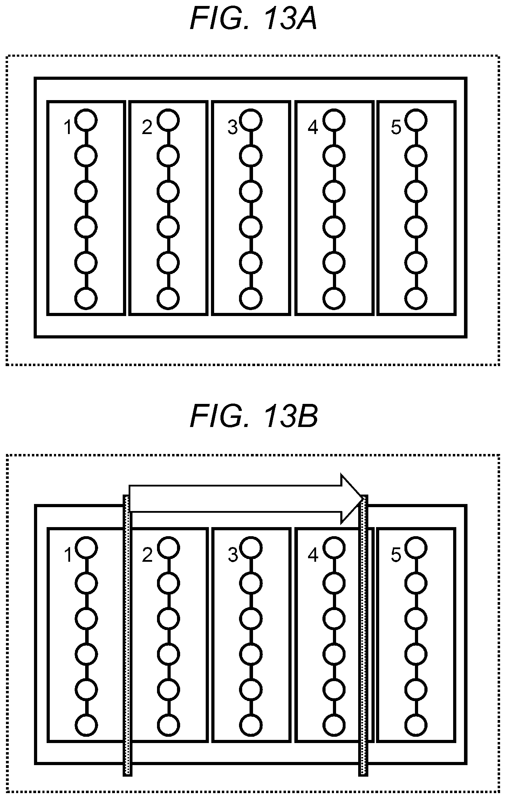

FIG. 13A is a diagram illustrating an example of a user interface (GUI) illustrating an arrangement diagram of the sensor units according to variation 3. FIG. 13A illustrates an example of the GUI displaying an arrangement diagram of five sensor units 1 to 5 (sensor units 101).

FIG. 13B is a diagram illustrating a state of shelf assignment setting in an arrangement diagram of the sensor units according to variation 3. FIG. 13B is an arrangement diagram of sensor units 1 to 5 illustrated in FIG. 13A and illustrates a state in which the shelf assignment is set.

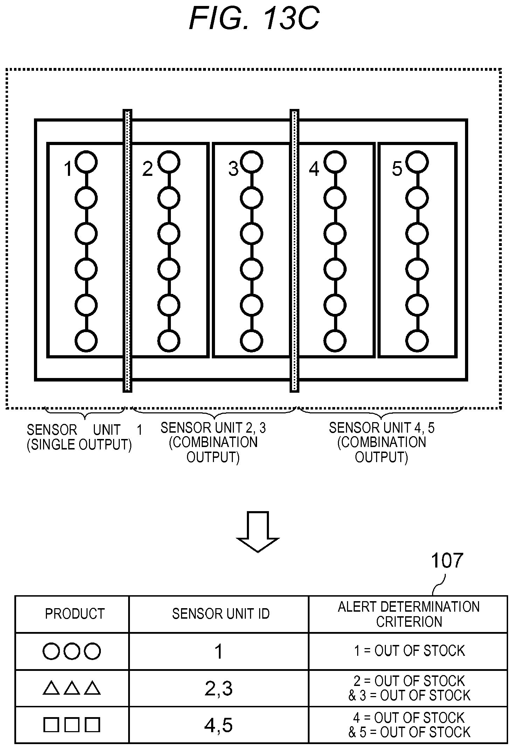

FIG. 13C illustrates a diagram illustrating an example of a GUI at the time of completing the shelf assignment setting in the arrangement diagram of the sensor units according to variation 3 and an example of an out-of-stock commodity management table corresponding to the shelf assignment setting. FIG. 13C illustrates an example of the arrangement diagram of sensor units 1 to 5 after the shelf assignment setting is completed and an example of out-of-stock commodity management table 107 set based on the arrangement of sensor units 101.

For example, a user operates an input device such as a mouse or a touch panel, thereby, setting shelf allocation in the arrangement of sensor units 1 to 5 illustrated in FIG. 13A. At this time, as illustrated in FIG. 13B, the user may make the shelf assignment be set while moving partition places in the shelf assignment by performing a drag operation of a figure indicating a shelf assignment position.

In FIG. 13C, as a result of the shelf assignment setting, sensor unit 1 and sensor unit 2 are partitioned, and sensor unit 3 and sensor unit 4 are partitioned. In this case, combination setter 104 sets sensor units 1 as one group, sets sensor units 2 and 3 as one group, and sets sensor units 4 and 5 as one group.

In addition, out-of-stock commodity manager 106 may set association between a commodity (a product name, a product identifier or the like) of out-of-stock commodity management table 107, a sensor unit (sensor unit ID), and an alert determination criterion, based on the setting result of combination setter 104. That is, a combination of sensor units 101 is automatically set in out-of-stock commodity management device 100, according to the shelf assignment setting performed by the user in the GUI.

For example, in FIG. 13C, the product "OOO" is associated with sensor unit 1, and detection of an out-of-stock commodity in sensor unit 1 is defined as an alert determination criterion. In the same manner, the product "ΔΔΔ" is associated with sensor units 2 and 3, and detection of an out-of-stock commodity in sensor units 2 and 3 is defined as an alert determination criterion. In addition, in the same manner, the product "□□□" is associated with sensor units 4 and 5, and detection of an out-of-stock commodity in sensor units 4 and 5 is defined as an alert determination criterion.

### [Variation 4]

In variation 4, a case (coordination with an electronic shelf label) where the electronic shelf label is used as an external device that is a transmission destination of an alert signal transmitted by an out-of-stock commodity management device will be described.

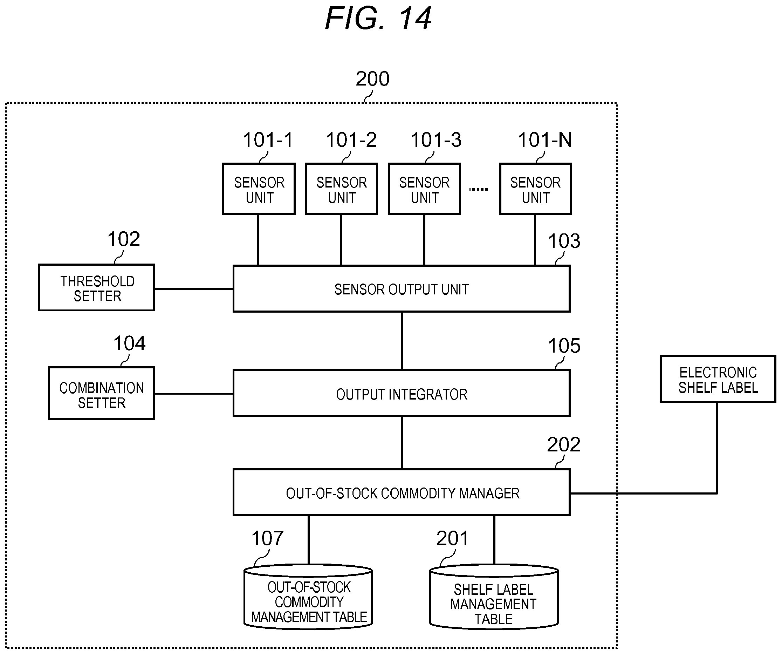

FIG. 14 is a block diagram illustrating a configuration of the out-of-stock commodity management device and the electronic shelf label according to variation 4. In FIG. 14, the same reference numerals or symbols are attached to configuration units performing the same operations as those in FIG. 1, and description thereof is omitted.

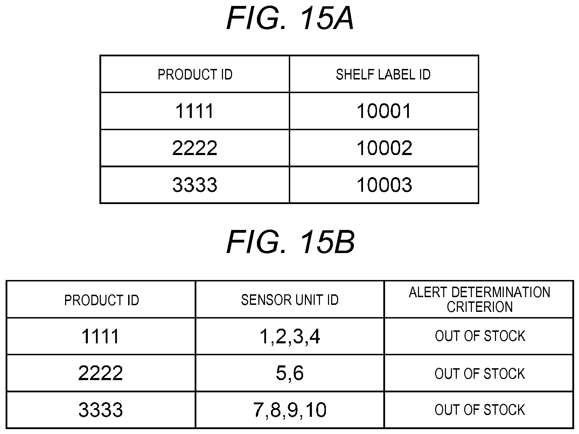

FIG. 15A is a diagram illustrating an example of a shelf label management table according to variation 4, and FIG. 15B is a diagram illustrating an example of an out-of-stock commodity management table according to variation 4. FIG. 15A illustrates an example of association between the product ID and the shelf label ID stored in shelf label management table 201. FIG. 15B illustrates an example of association between the product ID, the sensor unit ID, and the alert determination criterion stored in out-of-stock commodity management table 107 of out-of-stock commodity management device 200.

In out-of-stock commodity management device 200 illustrated in FIG. 14, shelf label management table 201 stores the association between the commodity (product ID) and the electronic shelf label (shelf label ID) corresponding to a commodity.

In addition to the same processing as in the above-described exemplary embodiment (out-of-stock commodity manager 106), in a case where a product satisfying the alert determination criterion is detected, out-of-stock commodity manager 202 transmits an alert signal to the electronic shelf label having the shelf label ID corresponding to the product (product ID) satisfying the alert determination criterion by referring to shelf label management table 201. The alert signal transmitted to the electronic shelf label may include an instruction signal which displays "no commodity" on the electronic shelf label.

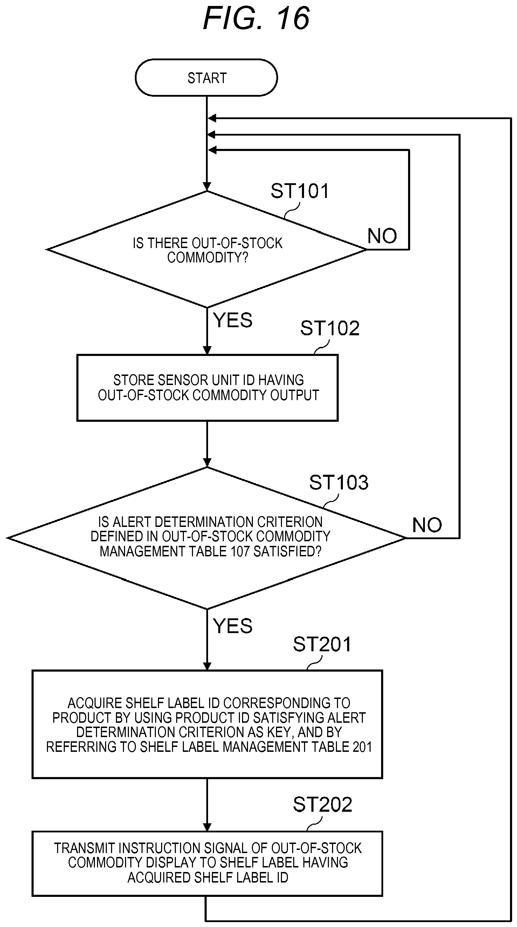

FIG. 16 is an operation flowchart illustrating out-of-stock commodity management processing of the out-of-stock commodity management device according to variation 4. In FIG. 16, the same reference numerals or symbols are attached to the same processing as in FIG. 6, and description thereof is omitted.

In ST201 illustrated in FIG. 16, out-of-stock commodity manager 202 acquires the shelf label ID corresponding to the product by using the product ID corresponding to the commodity (product) that satisfies the alert determination criterion in ST103 as a key and referring to shelf label management table 201.

For example, in a case where the product ID of the product that satisfies the alert determination criterion in FIG. 15B equals 1111, out-of-stock commodity manager 202 acquires the shelf label ID = 10001 corresponding to the product ID = 1111 by referring to the shelf label management table 201 illustrated in FIG. 15A. The same applies to a case where the alert determination criterion is satisfied for the other products.

In ST 202, out-of-stock commodity manager 202 transmits an instruction signal of out-of-stock commodity display ("no commodity" and the like) as the alert signal to the electronic shelf label having the shelf label ID acquired in ST201. Thereby, the electronic shelf label receiving the alert signal performs out-of-stock commodity display.

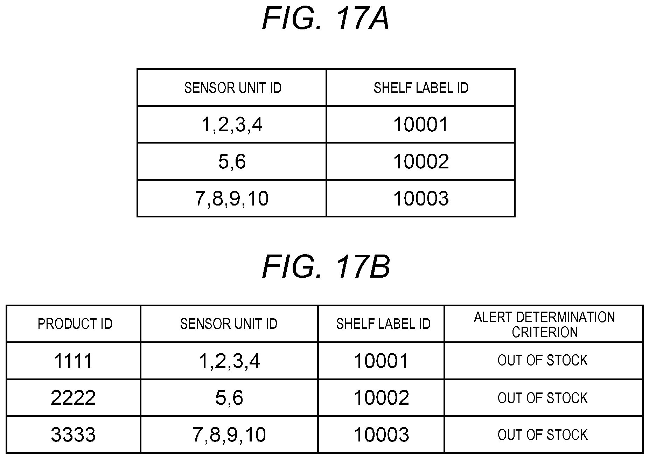

17A is a diagram illustrating another example of the shelf label management table according to variation 4, and FIG. 17B is a diagram illustrating an example of a table in which an out-of-stock commodity management table and a shelf label management table according to variation 4 are integrated.

In FIG. 15A, a case where the association between the product ID and the shelf label ID is stored in the shelf label management table 201 is described, but the present disclosure is not limited to this, and as illustrated in FIG. 17A, the association between the sensor unit ID and the shelf label ID may be stored in shelf label management table 201. Alternatively, as illustrated in FIG. 17B, out-of-stock commodity management table 107 and shelf label management table 201 may be integrated. Specifically, in the table illustrated in FIG. 17B, information (the product ID, the sensor unit ID, the shelf label ID, the alert determination criterion) included in both shelf label management table 201 illustrated in FIG. 15A and out-of-stock commodity management table 107 illustrated in FIG. 15B may be integrated and stored.

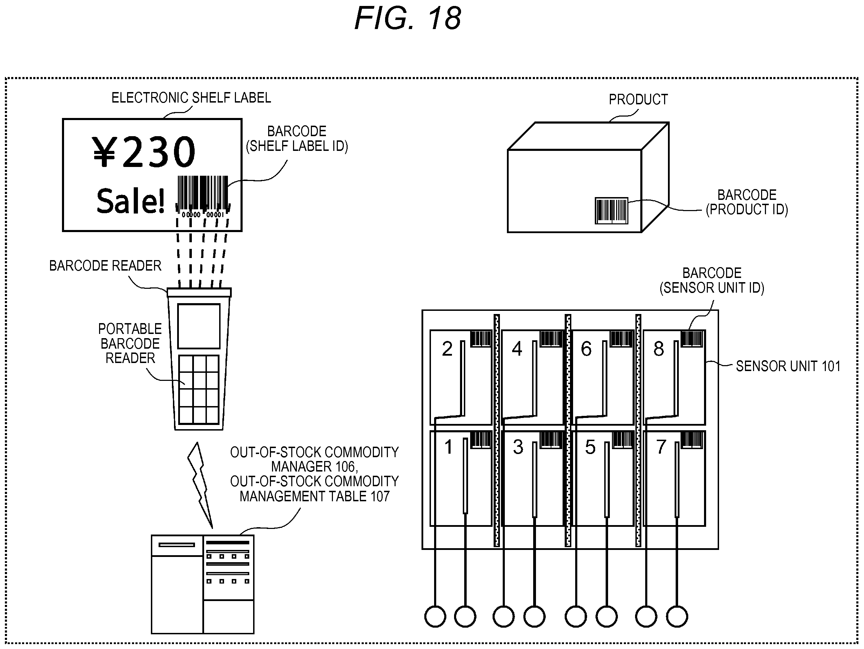

In addition, the association between the shelf label ID and the product ID or the sensor unit ID may be performed in the following sequence. FIG. 18 is a view illustrating a sequence example of associating the shelf label ID according to variation 4 and the product ID or the sensor unit ID.

(Preparation) As illustrated in FIG. 18, it is assumed that a barcode indicating the shelf label ID is displayed on a display screen of an electronic shelf label as a preparation sequence of association. In addition, as illustrated in FIG. 18, it is assumed that a label of a barcode indicating the product ID is affixed to the product, and a label of a bar code indicating the sensor unit ID is affixed to each of sensor units 101.

(Sequence 1) A user reads the barcode displayed on the electronic shelf label using a portable barcode reader.

(Sequence 2) The user acquires the shelf label ID in sequence 1, and thereafter, reads at least one of the bar code of the product associated with the electronic shelf label of the shelf label ID or the barcode of the sensor unit by using the portable barcode reader within a predetermined time (for example, within 5 seconds). For example, the user reads barcodes of a pair of sensor units 101 (for example, sensor units 1 and 2) corresponding to the electronic shelf label of the barcode read in sequence 1 within a predetermined time.

(Sequence 3) The user performs a confirmation operation of association between the shelf label ID and the product ID or the sensor unit ID by using the portable barcode reader. For example, the user performs confirmation processing by performing pressing of a confirmation button (hard button) installed in the portable barcode reader or pressing of a confirmation button (soft button) displayed on a touch panel installed in the portable barcode reader. If the confirmation processing is performed in sequence 3, association between the shelf label ID corresponding to the barcode read in sequence 2 and the product ID or the sensor unit ID corresponding to the barcode read in sequence 3 is confirmed.

(Sequence 4) Information indicating the association between the shelf label ID and the product ID or the sensor unit ID which is determined in sequence 3 is transmitted to out-of-stock commodity manager 106 (PC in FIG. 18) by wireless communication (for example, WiFi communication or the like).

(Sequence 5) Out-of-stock commodity manager 106 updates shelf label management table 201 (or out-of-stock commodity management table 107), based on the information indicating the association between the shelf label ID and the product ID or the sensor unit ID which is received in sequence 4.

### [Variation 5]

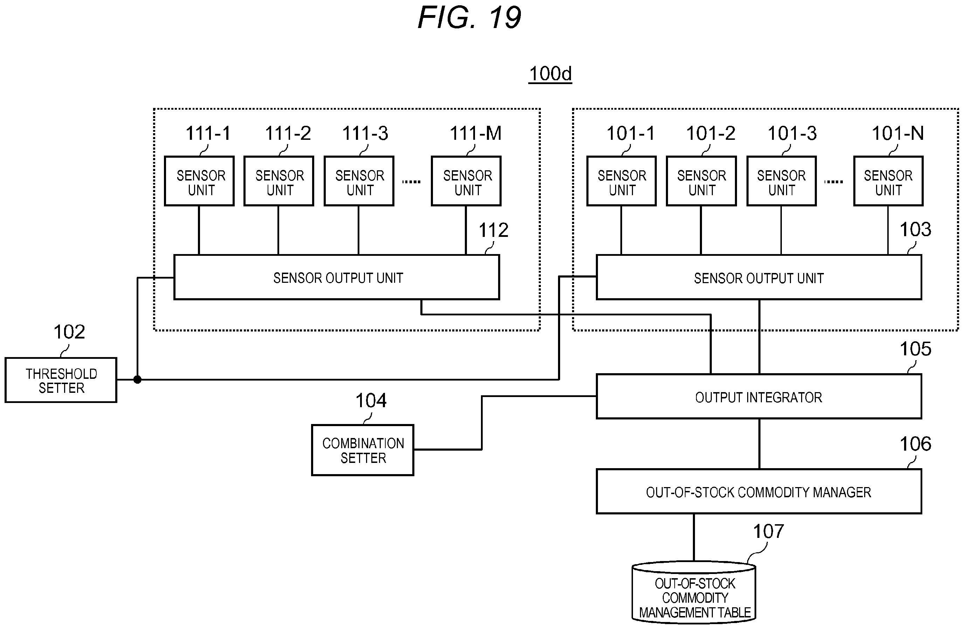

FIG. 19 is a block diagram illustrating a configuration of out-of-stock commodity management device 100d according to variation 5. In FIG. 19, the same reference numerals or symbols are attached to the same component units as in FIG. 1, and description thereof is omitted.

In addition to the configuration (N sensor units (101-1 to 101-N) and sensor output unit 103) of out-of-stock commodity management device 100 illustrated in FIG. 1, out-of-stock commodity management device 100d illustrated in FIG. 19 adopts a configuration including M (M is an arbitrary integer) sensor units (111-1 to 111-M) and sensor output unit 112. That is, out-of-stock commodity management device 100d has characteristics in which a plurality of configuration units obtained by integrating sensor units 101 and 111 and sensor output units 103 and 112 are provided and output integrator 105 integrates outputs from sensor output units 103 and 112.

This configuration assumes, for example, a case where sensor unit group 101-1 to N and sensor unit group 111-1 to M are respectively installed in different stages of one shelf having a plurality of stages, or a case where sensor unit group 101-1 to N and sensor unit group 111-1 to M are installed side by side in a single stage wider than a width of the sensor unit group 101 and 111. In this case, combination setter 104 sets a plurality of sensor unit groups (101 or 111) as one group from among N sensor units 101 and M sensor units 111, and thereby, results that output integrator 105 integrates outputs from the plurality of sensor unit groups 101 and 111 are output to out-of-stock commodity manager 106.

Configurations and operations of sensor unit 111 and sensor output unit 112 are the same as the configurations and the operations of sensor unit 101 and sensor output unit 103, and thus, description thereof is omitted.

In this configuration, in a case where commodities of the same item are placed across different stages of one shelf, in a case where commodities of the same item are placed on different shelves, or even in a case where commodities of the same item are placed on a shelf (there is one stage) with a width larger than a width of the sensor unit group, it is possible to perform efficient out-of-stock commodity management by integrating outputs from the sensor unit group corresponding to the same item in the same manner as the above-described method by using output integrator 105.

### [Variation 6]

In the above-described exemplary embodiment, the case where sensor output unit 103 outputs a digital signal (for example, the out-of-stock commodity state is 0, and the in-stock commodity state is 1) indicating an out-of-stock commodity state is described. In contrast to this, in variation 6, sensor output unit 103 digitizes and outputs numerical values of analog signals respectively input from respective sensor units 101.

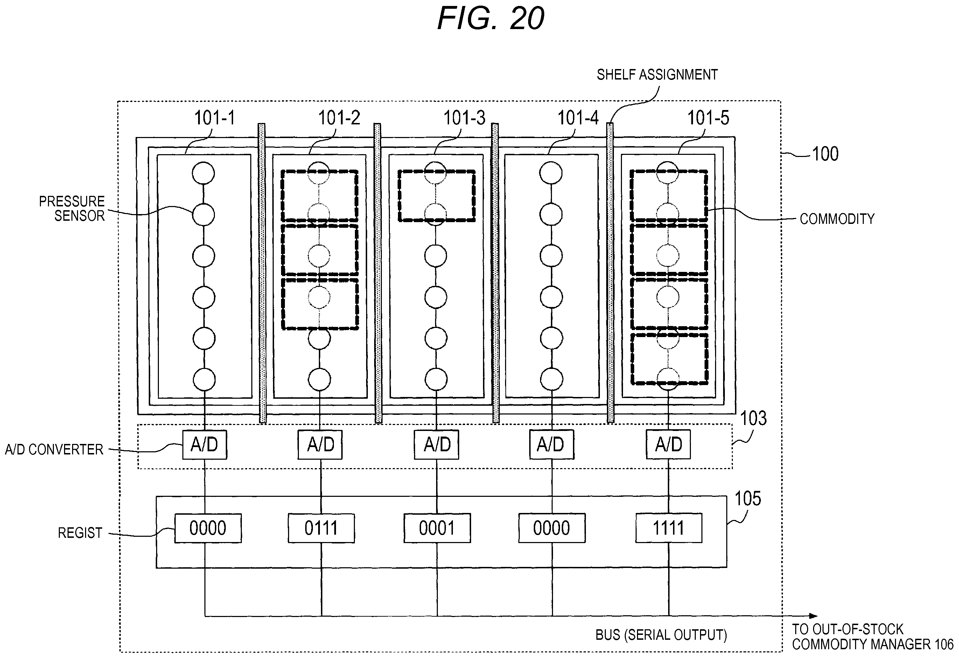

FIG. 20 illustrates an example of a case where each A/D converter included in sensor output unit 103 converts an output (analog signal) from each sensor unit 101 into 4-bit digital data and outputs the digital data to output integrator 105.

Outputs of the A/D converters are stored in the registers of output integrator 105, and, for example, are serially output to out-of-stock commodity manager 106 through a bus. The data stored in the registers is not limited to the serial output, and may be output in parallel.

In this case, threshold setter 102 is not required, and out-of-stock commodity management table 107 managed by out-of-stock commodity manager 106 may out-of-stock commodity determination by performing setting of a threshold of the digital numerical value. In addition, combination setter 104 may output the combination setting to out-of-stock commodity manager 106, out-of-stock commodity manager 106 groups the outputs of output integrator 105, based on the combination setting, and may manage the out-of-stock commodity state, based on bit strings for each group.

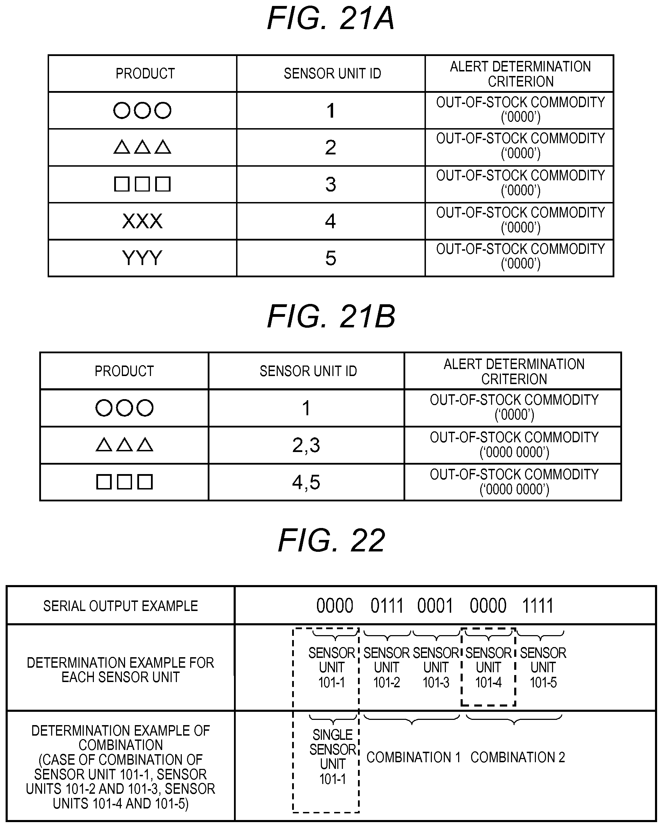

Examples of out-of-stock commodity management table 107 in this case are illustrated in FIGS. 21A and 21B.

For example, in the example illustrated in FIG. 21A, combination setter 104 sets sensor unit 101 (sensor unit ID = 1) installed in the region where the product "OOO" is placed to one group, sets sensor unit 101 (sensor unit ID = 2) installed in the region where the product "ΔΔΔ" is placed to one group, sets sensor unit 101 (sensor unit ID = 3) installed in the region where the product "□□□" is placed to one group, sets sensor unit 101 (sensor unit ID = 4) installed in the region where the product "XXX" is placed to one group, and sets sensor unit 101 (sensor unit ID = 5) installed in the region where the product "YYY" is placed to one group. That is, in FIG. 21A, combination setter 104 sets one group for each sensor unit 101.

In addition, in another example illustrated in FIG. 21B, combination setter 104 sets the sensor unit 101 (sensor unit ID = 1) installed in the region where the product "OOO" is placed to one group, and sets sensor units 101 (sensor unit IDs = 2 and 3) installed in the region where the product "ΔΔΔ" is placed to one group, and sets sensor units 101 (sensor unit IDs = 4 and 5) installed in the region where the product "□□□" is placed to one group. That is, in FIG. 2A, combination setter 104 sets a plurality of sensor units 101 as one group for each one or two.

In addition, in FIG. 21A and FIG. 21B, in a case where the outputs (here, 4-bit digital data) of sensor units 101 in each group indicate the out-of-stock commodity state ('0000'), out-of-stock commodity manager 106 determines that the corresponding product is out of stock. FIG. 21A and FIG. 21B illustrate examples in which a case where the digital data is '0000' is set to the out-of-stock commodity state, but a value determined to be the out-of-stock commodity state is not limited to '0000', and a numerical value (for example, "0001") corresponding to a predetermined output value (A current value, a voltage value or the like. For example, 20 [mA] or the like.) may be set.

FIG. 22 illustrates an out-of-stock commodity determination example in a case where respective sensor units 101 are set as one group, and illustrates an out-of-stock commodity determination example in a case where sensor unit 101-1 is set as one group, sensor units 101-2 and 101-3 are set as one group (combination 1), and sensor units 101-4 and 101-5 are set as one group (combination 2).

As illustrated in FIG. 22, the outputs of the A/D converters respectively corresponding to sensor units 101-1 to 101-5 become 0000, 0111, 0001, 0000, and 1111. In addition, here, it is assumed that out-of-stock commodity management table 107 has the contents illustrated in FIG. 21A and FIG. 21B.

In this case, in FIG. 22, in a case where respective sensor units 101 are set as one group, out-of-stock commodity manager 106 determines that sensor unit 101-1 and sensor unit 101-4 are in the out-of-stock commodity state, and determines that sensor units 101-2, 101-3, and 101-5 are in the in-stock commodity state. In addition, in FIG. 22, in a case where sensor units 101 are combined, out-of-stock commodity manager 106 determines that sensor unit 101-1 is in the out-of-stock commodity state and determines that combination 1 and combination 2 are in the in-stock commodity state.

A configuration, a circuit configuration, and the like of the output is not limited to the configuration described in the present example, and may be any configuration as long as a configuration is provided in which the outputs of sensor units 101 are digitally converted and are output to out-of-stock commodity manager 106 and the out-of-stock commodity state is determined.

### [Variation 7]

In Variation 7, the output signal of output integrator 105 is a bit string of one set (a series of signal groups) configured by digital signals corresponding to each of sensor units 101 within a group.

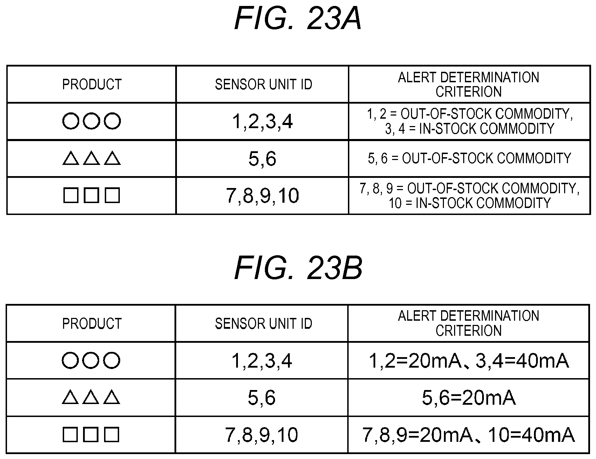

An example of out-of-stock commodity management table 107 in this case is illustrated in FIG. 23A.

In one example illustrated in FIG. 23A, combination setter 104 sets sensor units 101 (sensor unit ID = 1, 2, 3, and 4) installed in the region where the product "OOO" is placed to one group, sets sensor units 101 (sensor unit ID = 5 and 6) installed in the region where the product "ΔΔΔ" is placed to one group, and sets sensor units 101 (sensor unit ID = 7, 8, 9, and 10) installed in the region where the product "□□□" is placed to one group.

In this case, output integrator 105 outputs the digital signals (out-of-stock commodity '0' or in-stock commodity '1') corresponding to respective sensor units 101 of sensor unit ID = 1 to 10 to out-of-stock commodity manager 106.

Out-of-stock commodity manager 106 determines the out-of-stock commodity state in each group by referring to out-of-stock commodity management table 107 illustrated in FIG. 23A. For example, with respect to the product "OOO" illustrated in FIG. 23A, out-of-stock commodity manager 106 determines that the product "OOO" is out of stock regardless of the outputs of sensor units 101 of the sensor unit ID = 3 and 4 (even in a case of in-stock commodity state) in a case where the outputs of sensor units 101 of the sensor unit ID = 1 and 2 indicate the out-of-stock commodity state.

An output of output integrator 105 is not limited to one set of bit strings configured by digital signals corresponding to each of sensor units 101 within the group. For example, the output of output integrator 105 may be a bit string configured by the digital signals for each group represented by a logical sum or the like of the digital signals corresponding to each of sensor units 101 within the group. In this case, out-of-stock commodity manager 106 can determine that the commodity corresponding to the group is out of stock (for example, it is determined that the commodity is out of stock if the output is 0, and the commodity is in stock if the output is 1), based on the digital signals for each group output from output integrator 105.

In addition, as illustrated in FIG 23B, the output of output integrator 105 may be an output value (a current value, a voltage value or the like. For example, 20 [mA] or the like) of each sensor unit 101, and may be a digital numerical value corresponding to the output value. For example, with respect to the product "OOO" illustrated in FIG. 23B, out-of-stock commodity manager 106 determines that the product "OOO" is out of stock, regardless of the output of sensor unit 101 of the sensor unit ID = 3 and 4, in a case where the outputs of sensor units 101 of sensor unit ID = 1 and 2 indicate '20 mA'.

### INDUSTRIAL APPLICABILITY

One aspect of the present disclosure can be applied to an out-of-stock commodity management system or the like that manages an out-of-stock commodity on a shelf.

### REFERENCE MARKS IN THE DRAWINGS

100, 100 a, 100 b, 100 c, 100 d, 200 OUT-OF-STOCK COMMODITY MANAGEMENT DEVICE
101, 111 SENSOR UNIT
102 THRESHOLD SETTER
103, 112 SENSOR OUTPUT UNIT
104 COMBINATION SETTER
105 OUTPUT INTEGRATOR
106, 202 OUT-OF-STOCK COMMODITY MANAGER
107 OUT-OF-STOCK COMMODITY MANAGEMENT TABLE
151 TO 159 HARD SWITCH
201 SHELF LABEL MANAGEMENT TABLE

## Claims

1. An out-of-stock commodity management device comprising:
a plurality of sensor units, each including at least one pressure sensor and outputting an analog signal corresponding to a weight of a commodity that is measured by the at least one pressure sensor;
a sensor output unit that converts an analog signal which is output from each of the plurality of sensor units into a digital signal indicating whether or not the number of commodities in regions where respective sensor units are installed is equal to or less than a predetermined number;
a combination setter that sets one or more groups obtained by grouping the plurality of sensor units;
an output integrator that integrates the digital signal for each group; and
a manager that manages an out-of-stock commodity state of commodities in each group, based on the integrated digital signal.

2. The out-of-stock commodity management device according to Claim 1, further comprising:
a threshold setter that sets a threshold corresponding to the predetermined number,
wherein the sensor output unit compares an analog signal of the plurality of sensor units with the threshold to determine whether or not the number of commodities in regions where respective sensor units are installed is equal to or less than the predetermined number.

3. The out-of-stock commodity management device according to Claim 2, wherein the threshold setter sets the threshold for each sensor unit.

4. The out-of-stock commodity management device according to Claim 1, wherein the combination setter sets a sensor unit that is installed in a region where commodities of the same item are placed as one group, among the plurality of sensor units.

5. The out-of-stock commodity management device according to Claim 1, wherein the combination setter sets a sensor unit that is installed in each of the plurality of sub-regions which are obtained by dividing a region where commodities of the same item are placed as one group, among the plurality of sensor units.

6. The out-of-stock commodity management device according to Claim 5, wherein output levels of pressure sensors that configure the sensor unit differ for each of the plurality of sub-regions.

7. The out-of-stock commodity management device according to Claim 1, wherein, in a case where an out-of-stock commodity state of commodities in each of the plurality of groups satisfies a predetermined condition, the manager transmits an alert signal relating to out-of-stock of a commodity corresponding to the group to an external device.

8. The out-of-stock commodity management device according to Claim 1, wherein the integrated digital signal of each group indicates either an out-of-stock commodity state or an in-stock commodity state of commodities for each group.

9. An out-of-stock commodity management method comprising:
outputting an analog signal from each of a plurality of sensor units, each of which is configured by at least one pressure sensor;
converting the analog signal corresponding to a weight of a commodity that is detected by the at least one pressure sensor into a digital signal indicating whether or not the number of commodities in regions where the respective sensor units are installed is equal to or less than a predetermined number;
setting one or more groups obtained by grouping the plurality of sensor units;
integrating the digital signal for each group; and
managing an out-of-stock commodity state of commodities in each group, based on the integrated digital signal.
